# EUROPÄISCHE PATENTSCHRIFT

(11) **EP 1 172 010 B1**
(45) Veröffentlichungstag und Bekanntmachung des Hinweises auf die Patenterteilung: **16.10.2002**
(21) Anmeldenummer: 00926933.3
(22) Anmeldetag: 14.04.2000
(51) Int. Cl.: H04N 9/31, H04N 5/74

(54) **BILDPROJEKTOR**
IMAGE PROJECTOR
PROJECTEUR D'IMAGE

(30) Priorität: 22.04.1999 DE 19918302
(43) Veröffentlichungstag der Anmeldung: 16.01.2002
(73) Patentinhaber: STN ATLAS Elektronik GmbH, 28305 Bremen (DE)
(72) Erfinder: HAMPEL-VOGEDES, Bernhard, D-28279 Bremen (DE)
(74) Vertreter: Thul, Hermann, Dipl.-Phys.
(86) Internationale Anmeldenummer: EP0003379
(87) Internationale Veröffentlichungsnummer: WO00065846

(56) Entgegenhaltungen:
- WO-A-99/12358
- FR-A- 2 445 567
- US-A- 4 055 004
- US-A- 4 145 712
- US-A- 4 613 201
- US-A- 5 073 830
- US-A- 5 485 225
- US-A- 5 582 518

## Beschreibung

Die Erfindung betrifft einen Bildprojektor der im Oberbegriff des Anspruchs 1 definierten Gattung.

Bekannte CRT-Bildprojektoren, die im Raster- und Kalligraphiemodus arbeiten (US 4 614 941), im allgemeinen rasterkalligraphische Projektoren genannt, finden z.B. bei Flugsimulatoren zur Darstellung eines computergenerierten Bildes der Flugzeugumgebung Verwendung. Während im Rastermodus, bei dem das Bild wie bei einem Fernsehbild durch horizontale und vertikale Ablenkung des Lichtstrahls geschrieben wird, das eigentliche Umgebungsszenarium mit allen Details, wie Tower, Landebahn, Häuser, Straßen, Bäume, und dgl., dargestellt wird, ermöglicht der Kalligraphiemodus bei dem der Licht- oder Elektronstrahl in jeder Richtung mit jeder Geschwindigkeit vom Stillstand bis zu einem Schnellschwenk bewegt werden kann, die simultane Darstellung der sehr hellen Landebahnbefeuerung und farbigen Bereiche innerhalb des Umgebungsszenarium, sodaß sehr realistisch Flugfeld und Flugfeldumgebung sowie Landeszenen dargestellt werden können.

Rasterkalligraphische CRT-Projektoren haben einen durch die Kathodenstrahlröhre (CRT) beschränkten Lichtstrom, der nicht wesentlich gesteigert werden kann, so daß die Bilprojektion zur Darstellung eines ausreichend hellen simulierten Bildes in abgedunkelten Räumen vorgenommen wird. Bei den rasterkalligraphischen CRT-Projektoren werden dabei der Raster- und Kalligraphieanteil des Gesamtbildes hintereinander geschrieben. Dieses beschränkt die Bildwiederholrate des Projektors. Werden sehr viele kalligraphisch dargestellte Lichter (Landebahnbefeuerung) gezeigt oder ist die Auflösung des Bildes sehr hoch, muß der Rasteranteil interlaced dargestellt werden, wobei zwischen den beiden Halbbildern die Lichter kalligraphisch dargestellt werden. Die Verwendung von Halbbildern führt zu einem Flackern des Gesamtbildes.

Bei einem bekannten Bildprojektor der eingangs genannten Art (US 5 582 518) wird der den Rasteranteil schreibende Teilstrahl von einer CRT und der den Kalligraphieanteil schreibende Teilstrahl von einem Laser erzeugt. Beide Teilstrahlen werden nach entsprechender Modulation und Ablenkung mittels eines halbdurchlässigen Spiegels auf eine Fischaugenlinse geführt, die die beiden getrennten Bilder gemeinsam auf einem sphärischen Projektiosschirm abbildet. In einer modifizierten Ausführungsform dieses Bildprojektors ist die CRT durch einen zweiten Laser ersetzt, und beide Bildanteile des projizierten Bildes werden im Kalligraphiemodus geschrieben.

Bei einer bekannten Anordnung zur Erzeugung von polarisiertem Licht (US 5 073 830) werden aus einem von einer Lichtquelle, z.B. einem HeNe-Laser, ausgesendeten, nichtpolarisierten Lichtstrahl mittels eines Polarisationsstrahlteilers zwei polarisierte Teilstrahlen mit halber Helligkeit erzeugt, deren Polariationsebenen um 90° zueinander verdreht sind. Der eine Lichtteilstrahl wird direkt und der andere Teilstrahl über einen 90°-Umlenkspiegel und eine λ/2-Platte zu einer Linse geführt und durch diese auf einen gemeinsamen Ort fokussiert. Die so gebildete, polarisiertes Licht abstrahlende Lichtquelle wird z.B. für einen Videoprojektor benutzt, der einen "liquid-crystal"-Bildschirm aufweist.

Bei einem bekannten Bildprojektor (WO 99/12358) werden die von drei Lasern für die Farben Rot, Grün und Blau ausgesendeten Laserstrahlen nach ihrer Modulation mit dem Bildinhalt mittels Lichtleiter zu einem Ablenksystem geleitet, das die Laserstrahlen auf einem Bildschirm abbildet.

Der Erfindung liegt die Aufgabe zugrunde, einen rasterkalligraphischen Bildprojektor der Eingangs genannten Art lasertauglich zu machen, so daß rasterkalligraphisch geschriebene Bilder mit sehr viel höherer Helligkeit projiziert werden können.

Die Aufgabe ist durch die Merkmale des Anspruchs 1 gelöst.

Der erfindungsgemäße rasterkalligraphische Bildprojektor hat den Vorteil, daß er als Projektionsstrahl nur einen Laserstrahl verwendet und damit einen sehr viel höheren Lichtstrom zur Verfügung hat. Anders als bei kalligrapischen CRT-Projektoren werden durch die Aufspaltung des Laserstrahls in zwei Teilstrahlen der Rasteranteil und der Kalligraphieanteil gleichzeitig projiziert, so daß die Bildwiederholrate beim Rasteranteil nicht von der Anzahl der kalligraphisch darzustellenden Lichter beeinflußt wird. Somit können auch hochauflösende Bilder mit vielen Bildpunkten (Pixel) und gleichzeitig vielen Lichtpunkten "non-interlaced" projiziert werden. Die Lichtpunkte im Kalligraphieanteil können sehr viel kontrastreicher dargestellt werden. Ihr Kontrast zum Rasteranteil ergibt sich aus der längeren Verweildauer des Laserteilstrahls an den Lichtpunkten relativ zu der Verweildauer des anderen Laserteilstrahls bei einem Pixel der Rasterzeile. Verwendet man einen Strahlteiler, der die beiden Teilstrahlen im Verhältnis 1:1 aufspaltet, so verweilt bei 1000 Pixel je Zeile im Rasteranteil und fünf darzustellenden Lichtpunkten im Kalligraphieanteil der Laserteilstrahl für den Lichtpunkt 1000:5=200 mal so lange an einer Stelle. Der Kontrast beträgt für einen Lichtpunkt maximal 200:1. Bei Darstellung von vielen Lichtpunkten im Kalligraphieanteil kann ein anderes Teilerverhältnis für die Aufspaltung des Laserstrahls ausgewählt werden, so daß durch den hohen Lichtstrom die kürzere Verweildauer des Laserteilstrahls bei den einzelnen Lichtpunkten kompensiert wird. Die Zusammenführung der getrennt modulierten, verschieden polarisierten Teilstrahlen in einem Polarisationsstrahlteiler ermöglicht die fast verlustfreie Überlagerung der beiden Teilstrahlen im Projektionskopf.

Zweckmäßige Ausführungsformen des erfindungsgemäßen Bildprojektors mit vorteilhaften Weiterbildungen und Ausgestaltungen der Erfindung ergeben sich aus den weiteren Ansprüchen.

Gemäß einer bevorzugten Ausführungsform der Erfindung wird zur Drehung der Polarisationsrichtungen eine λ/2- Platte im Strahlengang eines der beiden Teilstrahlen verwendet.

Gemäß einer bevorzugten Ausführungsform der Erfindung werden die modulierten Teilstrahlen in polarisationserhaltende Glasfasern eingekoppelt und einem Projektionskopf zugeführt, in dem sie wieder aus den Glasfasern ausgekoppelt und zur Projektion auf einem Bildschirm optisch überlagert werden. Diese Auftrennung des Bildprojektors in Laser- und Modulationsteil einerseits und Projektionsteil andereseits ermöglicht eine räumliche Trennung beider Teile, was vorteilhaft bei der Anwendung in einem Flugsimulator ist, da nur der gewichtsgeringere Projektionskopf auf dem bewegtem Teil des Simulators angeordnet werden muß und so das Gewicht des bewegten Teils gering gehalten werden kann.

Die Erfindung ist anhand eines in der Zeichnung dargestellten Ausführungsbeispiels im folgenden näher beschrieben. Es zeigen:
- Fig. 1: ein Blockschaltbild eines rasterkalligraphischen Bildprojektors mit Laser- und Elektronikteil und davon räumlich trennbarem Projektionskopf,
- Fig. 2: eine schematisierte Detaildarstellung der optischen Strahlengänge im Laser- und Elektronikteil in Fig. 1,
- Fig. 3: eine schematisierte Detaildarstellung der optischen Strahlengänge in Projektionskopf gemäß Fig. 1,
- Fig. 4: eine schematisierte Detaildarstellung der optischen Strahlengänge im Laser- und Elektronikteil bei einem Farbprojektor.

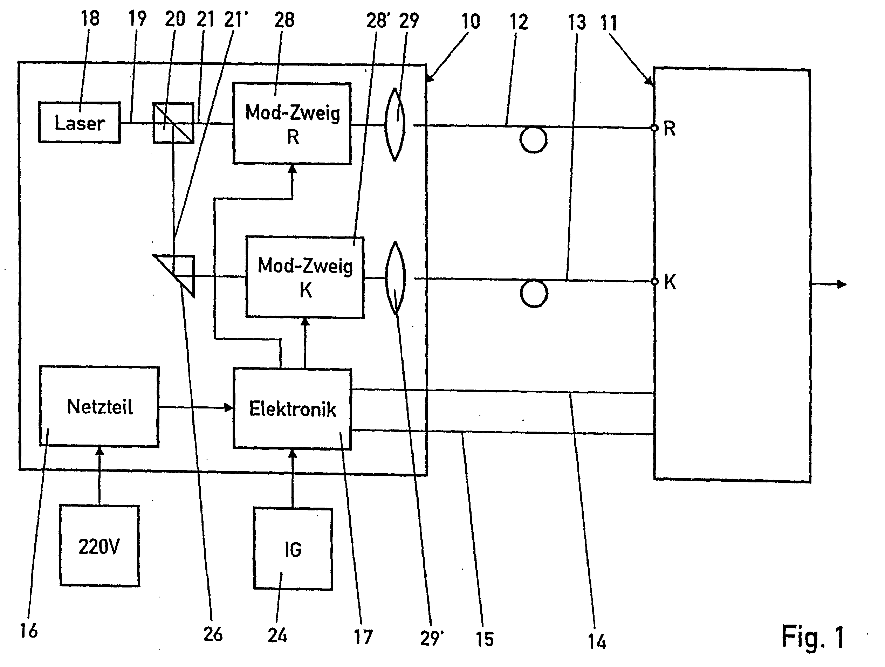

Der in Fig.1 bis 3 schematisiert dargestellte Bildprojektor weist einen Laser- und Elektronikteil 10 und einen räumlich davon trennbaren Projektionskopf 11 auf, die über zwei Glasfasern 12, 13 sowie über eine Signalleitung 14 und eine Stromversorgungsleitung 15 miteinander verbunden sind. Der Laser- und Elektronikteil 10 weist ein Netzteil 16 mit einer 220 Volt-Stromversorgung, eine Elektronik 17 sowie eine noch nachstehend ausführlich beschriebene optische Komponente auf.

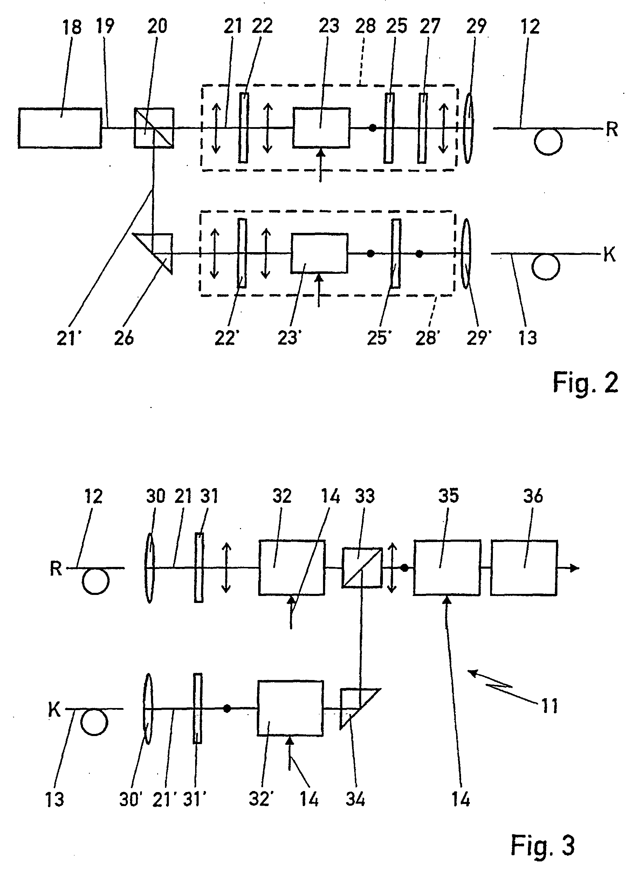

Der Bildprojektor arbeite im Rastermodus und im Kalligraphiemodus, wobei getrennt ein Rasteranteil und ein Kalligraphieanteil eines auf einem Bildschirm projizierten Gesamtbilds generiert werden. Die optische Komponente des Bildprojektors ist in Fig. 2 prinzipiell dargestellt. Ein von einer Laserquelle 18 erzeugter, polarisierter Laserstrahl 19 wird in einem Strahlteiler 20 in zwei Teilstrahlen 21 und 21' aufgespalten. Das Teilerverhältnis beträgt vorzugsweise 1:1, kann aber für bestimmte Anwendungen auch anders gewählt werden. Jeder Teilstrahl 21 und 21' durchläuft einen Modulationszweig 28 bzw. 28'. Mit dem Teilstrahl 21 wird der Rasteranteil R des Gesamtbildes erzeugt, mit dem Teilstrahl 21' der Kalligraphieanteil K. Das polarisierte Licht des Teilstrahls 21 durchläuft zunächst einen Polarisator 22, dessen Polarisationsrichtung mit der des polarisierten Teilstrahls 21 übereinstimmt, und wird in einem nachgeordneten elektrooptischen Modulator 23 gemäß dem Bildinhalt moduliert. Die im Strahlengang eingetragenen Doppelpfeile und Punkte symbolisieren die Polarisationsrichtung oder Polarisationsebene des Lichtes. Die Polarisationsebene ist diejenige Ebene in der das polarisierte Licht schwingt und sich fortgepflanzt, in Fig. 2 und 3 also die Zeichenebene bzw. die rechtwinklig auf dieser stehende Ebene. Das zu projizierende Gesamtbild wird in einem sog. Imagegenerator 24 erzeugt, der entsprechend die Elektronik 17 steuert, die ihrerseits wiederum den elektrooptischen Modulator 23 und den elektrooptischen Modulator 23' ansteuert. Die Modulatoren 23 und 23' sind dabei so geschaltet, daß bei Anlegen der maximalen Modulationspannung jeweils die Polarisationsebene bzw. Polarisationsrichtung des Teilstrahls 21 bzw. des Teilstrahls 21' um 90° gedreht wird. Die Modulation erfolgt dabei so, daß für die maximale Helligkeit eines Bildpunkts (Pixel) die maximale Spannung am Modulator 23 bzw. 23' liegt. Hinter dem Modulator 23 befindet sich ein zweiter Polarisator 25, dessen Polarisationsebene rechtwinklig zu der des ersten Polarisators 22 orientiert ist.

Der zweite Teilstrahl 21' des Lasers 18' wird nach dem Strahlteiler 20 mit einem Umlenkprisma 26 umgelenkt und in den Modulationszweig 28' eingespeist. Hier tritt der Teilstrahl 21' in gleicher Weise durch die gleichen optischen Bauelemente hindurch wie der Teilstrahl 21, sodaß übereinstimmende Bauelemente des Modulationszweigs 28' mit den gleichen Bezugszeichen gekennzeichnet und durch einen Beistrich von den optischen Bauelmenten im Modulationszweig 28 unterschieden sind.

Die am zweiten Polarisator 25 bzw. 25' austretenden Teilstrahlen 21, 21' sind in der gleichen Polarisationsebene linear polarisiert. Um eine spätere verlustfreie, optische Überlagerung der beiden Teilstrahlen 21, 21' im Projektionkopf 11 zu ermöglichen, wird die Polarisationsebene eines der beiden Teilstrahlen, hier die des Teilstrahls 21, um 90° gedreht, wozu dem Polarisator 22 eine λ/2-Platte 27 nachgeordnet ist. Um diese λ/2-Platte 27 unterscheiden sich die beiden Modulationszweige 28 und 28' für den Rasteranteil R und den Kalligraphieanteil K des Gesamtbilds. Jeder Teilstrahl 21 bzw. 21' wird über eine optische Einkoppeloptik 29 bzw. 29' in eine der beiden Glasfasern 12, 13 eingekoppelt.

Jede Glasfaser 12, 13 ist im Projektionskopf 11 an einer optischen Auskoppeloptik 30 bzw. 30' angeschlossen (Fig. 3). Jeder aus der Glasfaser 12 bzw. 13 ausgekoppelte Teilstrahl 21 bzw. 21' durchläuft einen Polarisator 31 bzw. 31', der dazu dient, etwaige Drehungen der Polarisationsebenen der Teilstrahlen 21, 21', die diese in den Glasfasern 12, 13 möglicher Weise erfahren, zu unterdrücken und die Polarisationsebene eindeutig zu definieren. Der Teilstrahl 21 wird in einer Ablenkeinheit 32 oder einem Scanner horizontal abgelenkt. Diese Ablenkung entspricht der Zeilenablenkung des Teilstrahls 21 und wird mit entsprechend hoher Ablenkfrequenz durchgeführt. Eine mögliche Ausführung der Ablenkeinheit 32 ist ein sich schnell drehender Polygonspiegel. Eine andere Ausführung der Ablenkeinheit 32, z.B. als mikrooptischer Spiegel, ist möglich. Der für den Kalligraphieanteil K verantwortliche, aus der Glasfaser 13 ausgekoppelte Teilstrahl 21' durchläuft zum gleichen Zweck einen gleichen Polarisator 31' und wird in einer Ablenkeinheit 32' horizontal abgelenkt. Im Gegensatz zu der Zeilenablenkung des Rasteranteils kann die Horizontalablenkung des Kalligraphieanteils innerhalb einer Zeile für die Lichtpunkte langsam geschehen. Eine mögliche Ausführung der Ablenkeinheit 32' ist ein Galvanospiegel, der so betrieben wird, daß er innerhalb der Zeile jeden Lichtpunkt nacheinander kurz anfährt. Dabei schreibt er die Zeilen abwechselnd von links nach rechts und von rechts nach links. Dadurch wird ein schneller Rücksprung vermieden. Eine andere Ausführung der Ablenkeinheit 32' zur horizontalen Ablenkung des Teilstrahls 21', z.B. als mikrooptischer Spiegel, ist möglich. Die beiden Ablenkeinheiten 32 und 32' werden von der Elektronik 17 über die Signalleitung 14 gesteuert.

Die beiden Teilstrahlen 21 und 21' werden nach den Ablenkeinheiten 32, 32' noch in einem Polarisationsstrahlteiler 33 überlagert, wozu zuvor der Teilstrahl 21' mittels eines Umlenkprismas 34 zu dem Polarisationsstrahlteiler 33 hin umgelenkt wird. Die überlagerten Teilstrahlen 21, 21' werden in einer weiteren Ablenkeinheit 35 vertikal abgelenkt. Bevorzugt wird hierfür ein Galvanospiegel verwendet. Dieser Spiegel ändert für jede Zeile seinen Winkel um ein kleines Inkrement. Nach jedem Bild kehrt er in die Ausgangsstelle zurück. Anstelle des Galvanospiegels kann aber auch eine andere, gleichwirkende Ablenkeinheit 35, z. B. ein mikrooptischer Spiegel, verwendet werden. Auch diese Ablenkeinheit 35 wird von der Elektronik 17 über die Signalleitung 14 gesteuert. Das nunmehr erzeugte rasterkalligraphische Bild wird mittels des Projektionsobjektivs 36 auf den Bildschirm oder eine andere Projektionsfläche projiziert.

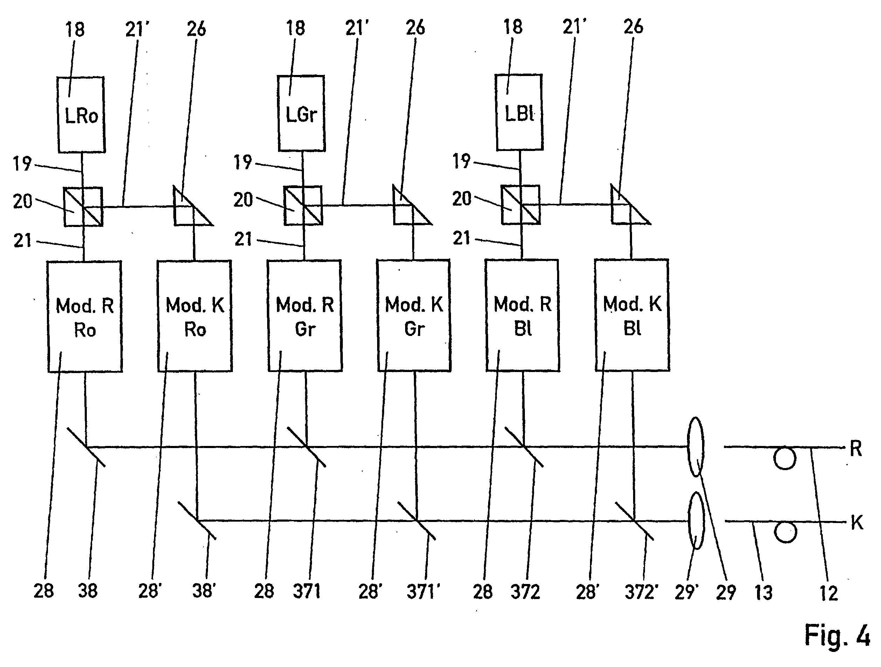

Nach dem vorstehend beschriebenen Prinzip der getrennten Lichtmodulation für den Raster- und den Kalligraphieanteil des Gesamtbildes erhält man ein monochromes Bild mit n Graustufen in der Farbe des von der Laserquelle 18 erzeugten Lasers. Zur Erzeugung von farbigen Bildern werden drei Laserquellen 18 mit Lasern von verschiedenen Wellenlängen benötigt, wie dies in Fig. 4 dargestellt ist. Je eine Laserquelle 18 emitiert Licht im roten, grünen und blauen Spektralbereich. Die Wellenlängen können beispielsweise 629nm, 532nm und 446nm betragen. Jeder Laserstrahl 19 der drei Laserquellen 18 wird - wie dies vorstehend zu Fig. 2 beschrieben worden ist - in die beiden Teilstrahlen 21 und 21' aufgeteilt und durchläuft den Modulationszweig 28 bzw. 28'. Vor der Einkopplung in die Glasfasern 12,13 werden die den Rasteranteil schreibenden Teilstrahlen 21 aller drei Laserstrahlen 19 und die den. Kalligraphieanteil schreibenden Teilstrahlen 21' aller drei Laserstrahlen 19 einander optisch überlagert, was mit Hilfe von dichroitischen Spiegeln 37, 37' erfolgt. Die dichroitischen Spiegel 37, 37' haben unterschiedliche Transmission und Reflexion in den drei Spektralbereichen rot, grün und blau. So haben die dichroitischen Spiegel 371 und 371' eine hohe Transmission für rot und eine hohe Reflexion für grün und die Spiegel 372 und 372' eine hohe Transmission für rot und grün und eine hohe Reflexion für blau. Für die Einkopplung der Teilstrahlen 21 und 21' im Spektralbereich rot sind lediglich einfache Umlenkspiegel 38 und 38' erforderlich.

Nach Einkopplung in die Glasfasern 12, 13 und Auskopplung aus den Glasfasern 12, 13 im Projektionskopf 11 ist der Verlauf der Strahlengänge der Teilstrahlen 21 und 21' wie er zu Fig. 3 beschrieben worden ist.

## Patentansprüche

1. Bildprojektor mit mindestens einem im Raster- und Kalligraphiemodus angesteuerten Projektionsstrahl zur Darstellung eines Raster- und eines Kalligraphieanteils eines auf einem Bildschirm projizierten Gesamtbilds, der aus zwei vor der Bildprojektion überlagerten und gleichzeitig auf den Bildschirm projizierten Teilstrahlen (21, 21') zusammengesetzt ist, die einer getrennten Modulation und Ablenkung derart unterzogen sind, daß der eine Teilstrahl (21) den Rasteranteil und der andere Teilstrahl (21') den Kalligraphieanteil schreibt, **dadurch gekennzeichnet, daß** die Teilstrahlen (21, 21') zwei durch Aufspaltung eines Laserstrahls (19) erzeugte, linear polarisierte Laserstrahlen mit um 90° gegeneinander gedrehten Polarisationsrichtungen oder -ebenen sind, und daß zur Überlagerung der unterschiedlich polarisierten Laserstrahlen ein Polarisationsstrahlteiler (33) vorgesehen ist.

2. Projektor nach Anspruch 1, **dadurch gekennzeichnet, daß** die überlagerten Teilstrahlen (21, 21') über ein Projetionsobjektiv (36) und eine vor dem Projektionsobjektiv (36) angeordnete, die Teilstrahlen (21, 21') vertikal ablenkende Ablenkeinheit (35), vorzugsweise über einen Galvanospiegel, geführt sind.

3. Projektor nach Anspruch 1 oder 2, **dadurch gekennzeichnet, daß** zur Aufspaltung des Laserstrahls (19) dieser über einen Strahlenteiler (20) geführt ist und jeder aus dem Strahlenteiler (20) austretende Teilstrahl (21, 21') einen gleichen Polarisator (22, 22') durchläuft.

4. Projektor nach einem der Ansprüche 1 - 3, **dadurch gekennzeichnet, daß** ein von jedem Teilstrahl (21, 21') durchlaufener optischer Modulator (23, 23') so ausgebildet ist, daß er bei maximaler Modulationspannung die Polarisationsrichtung oder -ebene des einfallenden polarisierten Teilstrahls (21, 21') um 90° dreht, daß dem Modulator (23, 23') ein Polarisator (25, 25')nachgeordnet ist, dessen Polarisationsrichtung oder -ebene gegenüber der des am Modulator (23, 23') einfallenden polarisierten Teilstrahls (21, 21') um 90° gedreht ist, und daß die Ansteuerung des Modulators (23, 23') derart erfolgt, daß für eine maximale Helligkeit eines Bildpunkts die maximale Spannung am Modulator (23, 23') liegt.

5. Projektor nach Anspruch 4, **dadurch gekennzeichnet, daß** die Drehung der Polarisationsrichtungen oder -ebenen der beiden Teilstrahlen (21, 21') im Strahlengang nach den Modulatoren (23, 23') vorgenommen ist, vorzugsweise mittels eines im Strahlengang eines Teilstrahls (21) angeordneten optischen Bauteils (27), das die Polarsationsrichtung oder -ebene des einfallenden polarisierten Teilstrahls (21) um 90° dreht.

6. Projektor nach Anspruch 5, **dadurch gekennzeichnet, daß** das optische Bauteil eine λ/2-Platte (27) ist, die vorzugsweise unmittelbar hinter dem dem Modulator (23) nachgeordneten Polarisator (25) angeordnet ist.

7. Projektor nach einem der Ansprüche 1 - 6, **dadurch gekennzeichnet, daß** jeder modulierte Teilstrahl (21, 21') mittels einer optischen Einkoppeloptik (29, 29') in eine polarisationserhaltende Glasfaser (12,13) eingekoppelt und über die Glasfaser (12, 13) in einen Projektionskopf (11) eingespeist ist.

8. Projektor nach Anspruch 7, **dadurch gekennzeichnet, daß** jede Glasfaser (12, 13) an einer von zwei im Projektionskopf (11) angeordeneten Auskoppeloptiken (30, 30') angeschlossen ist und daß der aus der Auskoppeloptik (30) austretende, den Rasteranteil schreibende Teilstrahl (21) über eine den Teilstrahl (21) mit hoher Ablenkfrequenz horizontal ablenkende Ablenkeinheit (32), vorzugsweise einen drehenden Polygonspiegel, und der aus der Auskoppeloptik (30') austretende, den Kalligraphieanteil schreibende Teilstrahl (21') über eine den Teilstrahl (21') mit geringer Ablenkfrequenz horizontal ablenkende Ablenkeinheit (32') vorzugsweise über einen Galvanospiegel, geführt ist.

9. Projektor nach Anspruch 8, **dadurch gekennzeichnet, daß** die Ablenkeinheit (32') für den den Kalligraphieanteil schreibenden Teilstrahl (21') so ausgebildet ist, daß innerhalb einer durch die maximale Horizontalablenkung festgelegten Zeile alle darzustellenden Lichtpunkte nacheinander kurz angesteuert werden.

10. Projektor nach Anspruch 9, **dadurch gekennzeichnet, daß** die Ablenkeinheit (32') so ausgebildet ist, daß in aufeinanderfolgenden Zeilen die horizontale Ablenkrichtung gegensinnig ist.

11. Projektor nach einem der Ansprüche 8 - 10, **dadurch gekennzeichnet, daß** jeder Auskoppeloptik (30, 30') ein Polarisator (31, 31') nachgeordnet ist.

12. Projektor nach einem der Ansprüche 7 - 11, **dadurch gekennzeichnet, daß** zur Erzeugung eines farbigen Gesamtbilds drei Projektionsstrahlen vorgesehen sind, wobei jeweils ein Projektionsstrahl ein Laserstrahl (19) im grünen, ein Laserstrahl (19) im roten und ein Laserstrahl im blauen Spektralbereich ist, und daß vor Einkopplung der Teilstrahlen (21, 21') in die Glasfasern (12, 13) die den Rasteranteil schreibenden Teilstrahlen (21) aller drei Laserstrahlen (19) und die den Kalligraphieanteil schreibenden Teilstrahlen (21') aller drei Laserstrahlen (19) einander optisch überlagert werden.

13. Projektor nach Anspruch 12, **dadurch gekennzeichnet, daß** zur Überlagerung der jeweils drei Teilstrahlen (21, 21') dichroitische Spiegel (37, 37') mit unterschiedlicher Transmission und Reflexion in den drei Spektralbereichen vorgesehen sind.

## Claims

1. Image projector with at least one projection beam that is controlled in raster mode and in calligraphic mode, for displaying a raster part and a calligraphic part of a total image that is projected onto a screen and which is composed of two partial beams (21, 21') which are superimposed before the image projection and projected onto the screen at the same time and which are subjected to separate modulation and deflection in such a way that one partial beam (21) writes the raster part and the other partial beam (21') writes the calligraphic part, **characterized in that** the partial beams (21, 21') are two linearly polarized laser beams produced by splitting a laser beam (19) and having polarization directions or planes rotated through 90° with respect to each other, and **in that** a polarization beam splitter (33) is provided in order to superimpose the differently polarized laser beams.

2. Projector according Claim 1, **characterized in that** the superimposed partial beams (21, 21') are guided by a projection objective (36) and a deflection unit (35) which is arranged in front of the projection objective (36) and deflects the partial beams (21, 21') vertically, preferably by a galvanometer mirror.

3. Projector according to Claim 1 or 2, **characterized in that** in order to split the laser beam (19) the latter is guided by a beam splitter (20), and each partial beam (21, 21') emerging from the beam splitter (20) passes through an identical polarizer (22, 22').

4. Projector according to one of Claims 1 - 3, **characterized in that** an optical modulator (23, 23') through which each partial beam (21, 21') passes is constructed in such a way that, at the maximum modulation voltage, it rotates the polarization direction or plane of the incident polarized partial beam (21, 21') through 90°, **in that** downstream of the modulator (23, 23') there is arranged a polarizer (25, 25'), whose polarization direction or plane is rotated through 90° with respect to the polarized partial beam (21, 21') that is incident on the modulator (23, 23'), and **in that** the modulator (23, 23') is driven in such a way that for maximum lightness of an image point, the maximum voltage is present on the modulator (23, 23').

5. Projector according to Claim 4, **characterized in that** the rotation of the polarization directions or planes of the two partial beams (21, 21') is performed in the beam path downstream of the modulators (23, 23'), preferably by means of an optical component (27) which is arranged in the beam path of a partial beam (21) and which rotates the polarization direction or plane of the incident polarized partial beam (21) through 90°.

6. Projector according to Claim 5, **characterized in that** the optical component is a λ/2-plate (27), which is preferably arranged immediately downstream of the polarizer (25) arranged downstream of the modulator (23).

7. Projector according to one of Claims 1 - 6, **characterized in that** each modulated partial beam (21, 21') is coupled into a polarization-maintaining glass fibre (12, 13) by means of an optical input coupler (29, 29'), and is fed into a projection head (11) via the glass fibre (12, 13).

8. Projector according to Claim 7, **characterized in that** each glass fibre (12, 13) is connected to one of two optical output couplers (30, 30') arranged in the projection head (11), and **in that** the partial beam (21) emerging from the optical output coupler (30) and writing the raster part is guided via a deflection unit (32) which deflects the partial beam (21) horizontally at a high deflection frequency, preferably a rotating polygonal mirror, and the partial beam (21') emerging from the optical output coupler (30') and writing the calligraphic part is guided via a deflection unit (32') that deflects the partial beam (21') horizontally at a low deflection frequency, preferably via a galvanometer mirror.

9. Projector according to Claim 8, **characterized in that** the deflection unit (32') for the partial beam (21') that writes the calligraphic part is constructed in such a way that, within a line defined by the maximum horizontal deflection, all the points of light to be displayed are driven briefly one after another.

10. Projector according to Claim 9, **characterized in that** the deflection unit (32') is constructed in such a way that in successive lines the horizontal deflection direction is opposite.

11. Projector according to one of Claims 8 - 10, **characterized in that** a polarizer (31, 31') is arranged downstream of each optical output coupler (30, 30').

12. Projector according to one of Claims 7 - 11, **characterized in that** in order to produce an overall coloured image, three projection beams are provided, in each case a projection beam being a laser beam (19) in the green, a laser beam (19) in the red and a laser beam in the blue spectral range, and **in that** before the partial beams (21, 21') are coupled into the glass fibres (12, 13), the partial beams (21) that write the raster part and belong to all three laser beams (19), and the partial beams (21') that write the calligraphic part and belong to all three laser beams (19) are superimposed optically on one another.

13. Projector according to Claim 12, **characterized in that** to superimpose the respective three partial beams (21, 21'), dichroic mirrors (37, 37') with different transmission and reflection in the three spectral ranges are provided.

## Revendications

1. Projecteur d'images comprenant au moins un rayon de projection commandé en mode trame et en mode calligraphie pour représenter une partie trame et une partie calligraphie d'une image complète projetée sur un écran, laquelle se compose de deux rayons partiels (21, 21') superposés avant la projection d'image et projetés simultanément sur l'écran, lesquels sont soumis à une modulation et à une déviation séparées de manière à ce que l'un des rayons partiels (21) inscrit la partie trame et l'autre rayon partiel (21') la partie calligraphie, **caractérisé en ce que** les rayons partiels (21, 21') sont deux rayons laser à polarisation linéaire générés par le fractionnement d'un rayon laser (19) avec des sens ou des plans de polarisation tournés de 90° l'un par rapport à l'autre et qu'une lame séparatrice à polarisation (33) est prévue pour superposer les rayons laser de polarisation différente.

2. Projecteur selon la revendication 1, **caractérisé en ce que** les rayons partiels superposés (21, 21') sont guidés par un objectif de projection (36) et par une unité de déviation (35) qui dévie les rayons partiels (21, 21') dans le sens vertical, de préférence un miroir galvanique, disposée avant l'objectif de projection (36).

3. Projecteur selon la revendication 1 ou 2, **caractérisé en ce que** pour fractionner le rayon laser (19), celui-ci est guidé par une lame séparatrice (20) et chaque rayon partiel (21, 21') qui sort de la lame séparatrice (20) passe à travers un même polarisateur (22, 22').

4. Projecteur selon l'une des revendications 1 à 3, **caractérisé en ce qu'**un modulateur optique (23, 23') traversé par chaque rayon partiel (21, 21') est configuré de telle manière qu'en présence d'une tension de modulation maximale il tourne de 90° le sens ou le plan de polarisation du rayon partiel (21, 21') polarisé incident qu'un polarisateur (25, 25') est disposé à la suite du modulateur (23, 23'), dont le sens ou le plan de polarisation est tourné de 90° par rapport au rayon partiel (21, 21') polarisé incident sur le modulateur (23, 23') et que la commande du modulateur (23, 23') s'effectue de telle manière que la tension maximale est appliquée au modulateur (23, 23') pour une luminosité maximale d'un point d'image.

5. Projecteur selon la revendication 4, **caractérisé en ce que** la rotation des sens ou des plans de polarisation des deux rayons partiels (21, 21') dans le trajet des rayons est effectuée après les modulateurs (23, 23'), de préférence au moyen d'un composant optique (27) disposé dans le trajet de rayon d'un rayon partiel (21) qui tourne de 90° le sens ou le plan de polarisation du rayon partiel (21) polarisé incident.

6. Projecteur selon la revendication 5, **caractérisé en ce que** le composant optique est une lame λ/2 (27) qui est disposée de préférence directement derrière le polarisateur (25) disposé à la suite du modulateur (23).

7. Projecteur selon l'une des revendications 1 à 6, **caractérisé en ce que** chaque rayon partiel (21, 21') modulé est injecté à l'aide d'une optique d'alimentation optique (29, 29') dans une fibre de verre (12, 13) qui maintient la polarisation puis injecté dans une tête de projection (11) par le biais de la fibre de verre (12, 13).

8. Projecteur selon la revendication 7, **caractérisé en ce que** chaque fibre de verre (12, 13) est raccordée à l'une des deux optiques de sortie (30, 30') disposées dans la tête de projection (11) et que le rayon partiel (21) sortant de l'optique de sortie (30) et inscrivant la partie trame est guidé par une unité de déviation (32) qui dévie le rayon partiel (21) dans le sens horizontal avec une fréquence de déviation élevée, de préférence un miroir polygonal tournant, et le rayon partiel (21') sortant de l'optique de sortie (30') et inscrivant la partie calligraphie est guidé par une unité de déviation (32') qui dévie le rayon partiel (21') dans le sens horizontal avec une fréquence de déviation plus faible, de préférence un miroir galvanique.

9. Projecteur selon la revendication 8, **caractérisé en ce que** l'unité de déviation (32') pour le rayon partiel (21') inscrivant la partie calligraphie est configurée de telle manière que tous les points lumineux à représenter dans une ligne définie par la déviation horizontale maximale sont excités brièvement l'un après l'autre.

10. Projecteur selon la revendication 9, **caractérisé en ce que** l'unité de déviation (32') est configurée de telle manière que le sens de la déviation horizontale est inversé dans des lignes successives.

11. Projecteur selon l'une des revendications 8 à 10, **caractérisé en ce qu'**un polarisateur (31, 31') est disposé à la suite de chaque optique de sortie (30, 30').

12. Projecteur selon l'une des revendications 7 à 11, **caractérisé en ce que** trois rayons de projection sont prévus pour produire une image complète en couleur, un rayon de projection étant à chaque fois composé d'un rayon laser (19) dans la plage spectrale du vert, d'un rayon laser (19) dans celle du rouge et d'un rayon laser dans celle du bleu, et qu'avant d'injecter les rayons partiels (21, 21') dans les fibres de verre (12, 13), les rayons partiels (21) des trois rayons laser (19) qui inscrivent la partie trame et les rayons partiels (21') des trois rayons laser (19) qui inscrivent la partie calligraphie sont superposés optiquement les uns aux autres.

13. Projecteur selon la revendication 12, **caractérisé en ce que** des miroirs dichroïques (37, 37') à transmission et à réflexion différentes sont prévus dans les trois plages spectrales pour superposer les trois rayons partiels (21, 21') respectifs.
